Europäisches Patentamt

European Patent Office

Office européen des brevets

(19)

(11) Publication number: **0 312 382 B1**

(12) **EUROPEAN PATENT SPECIFICATION**

(45) Date of publication of patent specification: **25.11.92** (51) Int. Cl.5: **F16C 1/22**

(21) Application number: **88309641.4**

(22) Date of filing: **14.10.88**

(54) **Control cable adjuster device.**

(30) Priority: **14.10.87 US 108483**

(43) Date of publication of application:
**19.04.89 Bulletin 89/16**

(45) Publication of the grant of the patent:
**25.11.92 Bulletin 92/48**

(84) Designated Contracting States:
**DE ES FR GB IT**

(56) References cited:
**EP-A- 0 234 864**
**EP-A- 0 267 685**
**FR-A- 2 617 920**
**US-A- 4 378 713**
**US-A- 4 543 849**

(73) Proprietor: **BABCOCK INDUSTRIES INC.**
**26500 Haggerty Road P.O. Box 2416**
**Farmington Hills Michigan 48333-2416(US)**

(72) Inventor: **Stormont, James David**
**3000 Mack Island Road Grass Lake**
**Michigan(US)**

(74) Representative: **Lewis, David Overington**
**Babcock International plc 217 Tabard Street**
**London SE1 4UR(GB)**

Rank Xerox (UK) Business Services

EP 0 312 382 B1

# Description

This invention relates to control cable adjuster devices and, more particularly to devices insertable into control cable runs either at intermediate locations or adjacent terminations to provide tensioning of the cable run, such as in foot pedal operated cable controlled brake systems or clutches in automobiles.

In EP-A-0234864 there is disclosed a control cable adjuster device including a tubular housing having at one end a first anchorage connectable into a cable run and at the other end locating means for a termination member rod resiliently biased moveably to extend co-axially of the tubular housing between a position fully retracted into, and a position fully extended from, the tubular housing, the termination member rod being formed on the surface thereof with circumferential serrations engageable with collet means and, on the end thereof remote from the tubular housing, a second anchorage connectable into the cable run, and restraint means provided adjacent a portion of the termination member rod external to the tubular housing moveable between an engaged position in which a portion of the restraint means is engaged with the termination member rod, such that relative movement between the termination member rod and the tubular housing is restrained, and a disengaged position in which the restraint means is disengaged from the termination member rod, the restraint means including a first member formed with a bore co-axial with the termination member rod through which the termination member rod freely extends and connected into an end portion of the tubular housing in a manner allowing limited axial movement adjacent a shoulder restricting axially outward movement, and a second member having a bore formed with an internal projection, the second member and the internal projection being moveable relative to the axis of the termination member rod between the engaged position at which the internal projection engages in the serrations on the termination member rod and the disengaged position in which the internal projection is radially spaced from the serrations.

By the present invention the device includes means provided to restrain relative rotation between the first member and the housing and means provided to restrain axial movement of the second member relative to the first member whilst permitting the second member to be rotatable relative to the first member eccentrically in relation to the central axis of the bore in order to move the projection between the engaged position and the diseaged position.

The invention will now be described, by way of example, with reference to the accompanying, partly diagrammatic, drawings, in which:-

Figure 1 is a longitudinal sectional view of a self-adjusting cable control device in an engaged and unlocked configuration:

Figure 2 is a longitudinal sectional view of a portion of the device showing the device in a locked configuration;

Figure 3 is a longitudinal sectional view of a portion of the device showing the device in an unlocked and disengaged configuration;

Figure 4 is an end view of a release tube member;

Figure 5 is a cross section taken on the line V-V in Figure 4;

Figure 6 is the other end view of the release tube member, with a portion broken away;

Figure 7 is an end view of a locking member;

Figure 8 is a cross section taken on the line VIII-VIII in Figure 7;

Figure 9 is a cross section taken on the staggered line IX-IX in Figure 1; and

Figure 10 is a cross section taken on the staggered line X-X in Figure 2.

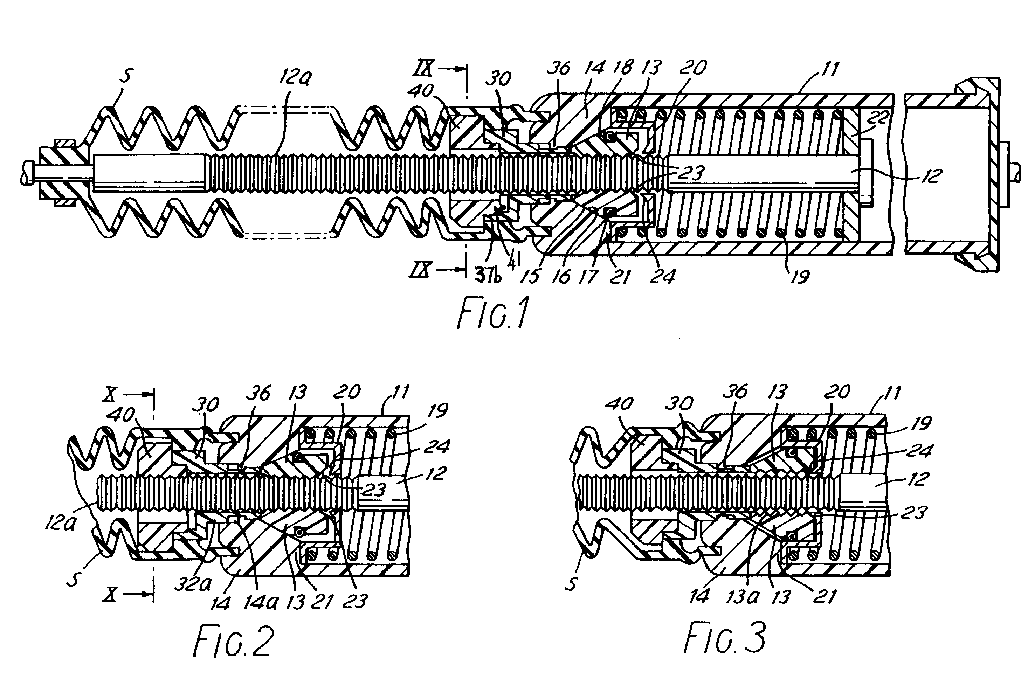

Referring to Figures 1 to 3, the self-adjusting cable control device is arranged to be interposed in a cable run (not shown) and comprises a connecting member in the form of a tubular housing 11 having at one end a cap 10 carrying a cable anchorage crimped in position. A termination member in the form of a rod 12 extends through an opening in the other end portion 14 of the tubular housing end 11 which opening serves to locate the termination member rod. The device is connected into a cable run with first and second anchorages (not shown in detail) on the end cap 10 and on the termination member rod 12.

Clutch means releasably connecting the tubular housing 11 and the rod 12 include collet members 13 positioned around the rod 12 within the end portion 14 of the tubular housing 11. Each collet member 13 has a first, external, part frusto-conical surface 15 at one end adapted to engage a complementary, first, internal frusto-conical surface 16 on the end portion 14. A circumferential retaining spring 17 extends circumferentially in aligned grooves 18 in each collet member 14 resiliently to urge the collet members 13 radially inwardly into contact with the termination member rod 12. A helical spring 19 interposed between a cup washer 20 seated on an abutment or shoulder 21 on the end portion 14 and a disc 22 fixed on the end of the termination member rod 12 resiliently urges the termination member rod 12 axially inwardly of the housing 11 and to the right as seen in Figure 1. Each collet member 13 is also formed at the end thereof opposite the end having surface 15, with a second, internal, part frusto-conical surface 23, complementary to a second, external, frusto-conical surface 24 on the cup washer 20. The radially inner faces of the collet members 13 and a portion of the rod 12 are circumferentially grooved to form axially spaced, co-acting, 90° triangular profile, serrations 13a, 12a. The interengagement of the internal part frusto-conical surfaces 23 of the collet members 13 with the external frusto-conical surfaces 24 of the cup washer 20 serves to assist the collet members 13 to disengage from the serrations 12a on the radially inner faces upon relative axial movement occurring as described hereinafter.

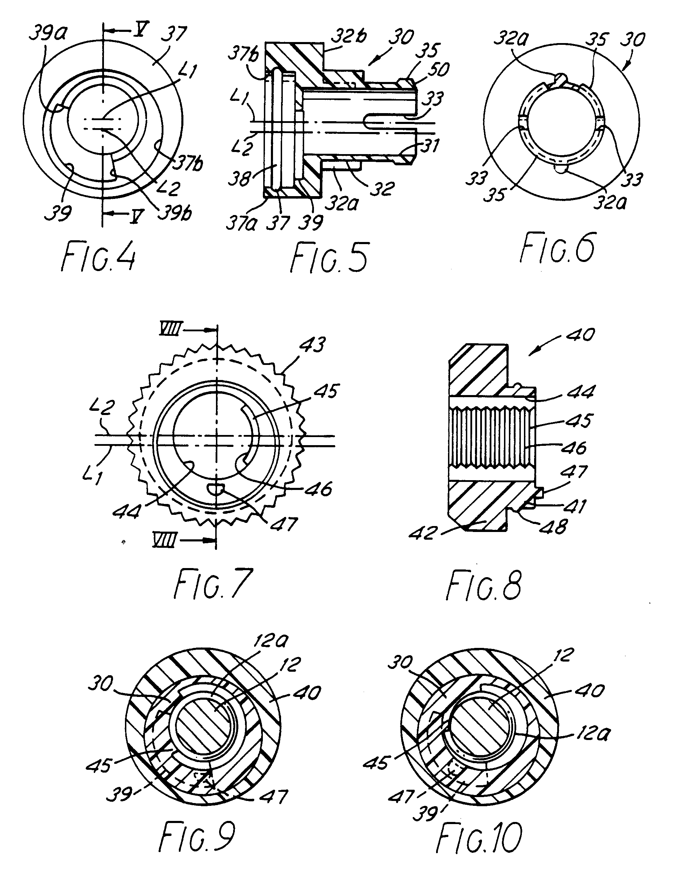

As shown in Figures 4 to 6, an axially moveable release tube member 30 extending through the end portion 14 around the termination member rod 12 has an inner end portion 32 of cylindrical form having a co-axial bore 31 on axis $L_1$ and provided with an external, circumferential rib 35, the cylindrical wall being formed with slits 33 to facilitate assembly by enabling the rib 35 to be deflected inwardly to be snapped past a circumferential rib 36 on the end portion 14 of the tubular housing to retain the tube member 30 against axially outward movement relative to the end portion whilst allowing limited axial movement.

Circumferentially spaced, axially extending, external splines 32a on the inner end portion 32 of the release tube member mate with complementary axial grooves 14a in the end portion 14 of the housing 11 to restrain relative rotation between the inner end portion 32 and the housing 11. An outer end portion 37 of the release tube member 30 has a radially outer cylindrical surface 37a co-axial with the axis $L_1$ of the inner end portion 32 and an eccentric bore 37b with a circumferential groove 38 on an axis $L_2$ offset from the axis $L_1$. The base of the eccentric bore is formed with a segmental recess 39 having radial end faces 39a, 39b. A face 32b on the outer end portion 37 serves to limit movement axially inward of the tubular housing.

As shown in Figures 7 and 8 a locking member 40 includes a knurled portion 43 and co-axial central bore 44 with an eccentric boss 41 having a radially outer cylindrical surface (of diameter equal to that of the eccentric bore 37b) and a circumferential rib 48 with an axis $L_1$, offset from the axis $L_2$ of the bore 44. A projection 47 is provided on the end face of the boss 42. A part cylindrical projection 45 is provided on the face of the bore 44 and is formed with an axially spaced array of circumferentially extending serrations 46 complementary to the serrations 12a on the rod 12.

The locking member 40 and the release tube member 30 are assembled together by pressing the boss 42 on the locking member 40 into the eccentric bore 37b of the release tube member 30 such that the circumferential rib 48 mates with the circumferential groove 38 and the projection 47 registers with the segmental recess 39. The inner end portion 32 of the release tube member 30 is then assembled on to the end portion 14 of the housing 11 by pressing the inner end portion 32 into the end portion 14 and the axial splines 32a in register with axial grooves 14a to urge the circumferential rib 35 on the inner end portion past the circumferential rib 36 on the end portion, the slits 33 facilitating this operation.

With the locking member 40, the release tube member 30 and the tubular housing assembled together, the locking member is rotatable through a restricted arc, which arc is determined by the projection 47 contacting the radial faces 39a, 39b of the recess 39. Since the locking member 40 rotates about the axis $L_2$ offset from the central axis $L_1$ of the tubular housing, the spacing of the cylindrical projection 45 and serrations 46 from the central axis $L_1$ is varied with rotation from an unlocked position out of contact with the rod 12 - which thus is free to move axially of the bore 44 - and a locked position in which the serrations 46 fully engage with the serrations 12a on the rod - thereby restraining axial movement of the rod relative to the locking member 40. Since the locking member 40 is connected through the circumferential rib 48 and groove 38 to the release tube member 30, which in turn is connected for limited axial movement to the tubular housing 11, relative axial movement between the housing and the rod 12 is restrained when the locking member 40 is rotated to the engaged position other than for a short movement permitted by the spacing of the face 32b and the circumferential rib 35 on the release tube member 30 in relation to the location of the circumferential rib 36 and end face of the end portion 14 of the tubular housing, to facilitate dis-engagement of the collet members 13 from the rod 12.

A convoluted shroud or boot S of elastic material surrounds the locking member 40 and seats in the end portion 14 of the tubular housing 11 and on the rod 13 to provide a seal against dirt, oil and other deleterious matter.

In operation, to install the device into a cable run, the locking member 40 is rotated into a position indicated in Figures 1, 3 and 9 in which the rod 12 passes freely through the bore 44 . The locking member 40 and the release tube member 30 are then urged axially toward the tubular housing 11 to move the release tube 30 axially into the tubular housing, thereby moving the inner end 50 into contact with the collet members 13 and, by the inter-action of the sets of frusto-conical surfaces 23, 24, moving the collet members 13 axially and radially out of engagement with the serrations 12a on the rod 12. Tension is then applied to the rod 12 and the tubular housing 11 to withdraw the rod 12 axially from the housing to an extended position and thereby compress the helical spring 19. With the rod 12 at the extended position indicated in Figure 1, the locking member 40 is rotated to engage the serrations 46 on the portion 45 with the serrations 12a on the rod - by virtue of the eccentricity of the boss 41 - thereby preventing retraction of the rod 12 into the tubular housing 11 by the effect of the helical spring 19. The device is then connected into the slack cable run by attachments (not shown) to the tubular housing 11 and rod 12. Having effected attachment, the locking member 40 is rotated to the original position in which the rod 12 passes freely through the bore 44, whereupon the resilience of the helical spring 19 urges retraction of the rod 12 axially into the housing 11 and applies tension to the cable run. Upon the helical spring 19 reaching full extension commensurate with the tension in the cable run, at an intermediate position of retraction of the rod 12 into the tubular housing 11, the resilience of the circumferential retaining spring 17 is such as to overcome the radial component of the force across the serrations 12a, 13a and urge the collet members 13 radially inwardly to bring the serrations into engagement, thereby restraining axial movement between the tubular housing 11 and the rod 12. Movement of the collet members radially inwardly urges the release tube member 30 axially outwardly. If, during use, the tension in the cable run falls below the force exerted by the helical spring 19 to an extent that axial movement of the rod 12 relative to the tubular housing 11 brings the frusto-conical faces 23, 24 into abutment and the radial component of the force across the serrations 12a, 13a and the frusto-conical surfaces 23, 24 is sufficient to exceed the force exerted by the circumferential retaining spring 17, the rod 12 being at an intermediate position of retraction, the collet members 13 move radially outwardly out of full engagement with the rod so that the respective serrations 12a, 13a ratchet to a new axial position to restore the balance of forces by adjusting the effective length of the cable run within the limits imposed by the length of the tubular housing 11.

Since the convoluted shroud or boot S is flexible, rotation of the locking member 40 can be effected by applying manual pressure through the convoluted shroud or boot adjacent the knurled portion 43 whilst holding the tubular housing 11, so that the convoluted shroud or boot serves at all times to limit ingress of grease or dirt or other deleterious matter into the tubular housing 11. The shroud or boot S also serves to bias the locking member 40 and the release tube member 30 away from the tubular housing 11.

It will be appreciated that the serations may be formed as a screw thread rather than axially spaced circumferential grooves.

It will also be appreciated that whilst the foregoing description envisages the device being connected into a run of core cable, preferably at one end thereof, the device is readily modified to be connected into a run of conduit of a control cable. In such an arrangement the core cable extends centrally through the device and the conduit is connected to the end of the tubular housing 11 and the rod 12, which are made hollow to accommodate the core cable. Alternatively, the conduit in the form of a tightly wound wire spiral, may be substituted for the rod provided strength considerations allows.

## Claims

1. A control cable adjuster device including a tubular housing (11) having at one end a first anchorage (10) connectable into a cable run and at the other end locating means for a termination member rod (12) resiliently biassed moveably to extend co-axially of the tubular housing (11) between a position fully retracted into, and a position fully extended from, the tubular housing, the termination member rod (12) being formed on the surface thereof with circumferential serrations (12a) engageable with collet means (13) and, on the end thereof remote from the tubular housing, a second anchorage connectable into the cable run, and restraint means provided adjacent a portion of the termination member rod (12) external to the tubular housing (11) moveable between an engaged position in which a portion of the restraint means is engaged with the termination member rod (12), such that relative movement between the termination member rod (12) and the tubular housing (11) is restrained, and a disengaged position in which the restraint means is disengaged from the termination member rod (12), the restraint means including a first member (30) formed with a bore (31) coaxial with the termination member rod (12) through which the termination member rod (12) freely extends and connected into an end portion (14) of the tubular housing (11) in a manner allowing limited axial movement adjacent a shoulder (36) restricting axially outward movement, and a second member (40) having a bore (44) formed with an internal projection (45), the second member and the internal projection being moveable relative to the axis of the termination member rod (12) between the engaged position at which the internal projection (45) engages in the serrations (12a) on the termination member rod (12) and the disengaged position in which the internal projection 45 is radially spaced from the serrations (12a), characterised in that means (32a, 14a) are provided restraining relative rotation between the first member (30) and the housing (11) and that means (38, 48) are provided restraining axial movement of the second member (40) relative to the first member (30) whilst permitting the second member (40) to be rotatable relative to the first member (30) eccentrically in relation to the central axis of the bore (31) in order to move the projection (45) between the engaged position and the disengaged position.

2. A control cable adjuster device as claimed in Claim 1, characterised in that the internal projection (45) has a radially inner face of part cylindrical configuration and is formed with an axially spaced array of circumferentially extending serrations (46) complementary to the serrations (12a) on the termination member rod (12).

3. A control cable adjuster device as claimed in Claim 1 or Claim 2, characterised in that the second member (40) is formed with an eccentric boss (41) having a radially outer cylindrical surface with an axis ($L_1$) offset from the axis ($L_2$) of the central bore (44) of the second member arranged to co-act with an eccentric bore (37b) formed in the first member (30).

4. A control cable adjuster device as claimed in Claim 3, characterised in that relative axial movement between the first member (30) and the second member (40) is restrained by means of a circumferential rib (48) formed on one of the members (30,40) co-acting with a circumferential groove (38) formed on the other of the members (30,40).

5. A control cable adjuster device as claimed in Claim 3, or Claim 4, characterised in that the relative rotational movement between the first member (30) and the second member (40) is restricted by means of a projection (47) on one of the members (30, 40) co-acting with stops (39a, 39b) formed on the other of the members (30, 40).

6. A control cable adjuster device as claimed in any preceding claim, characterised in that the first member (30) is formed with a cylindrical inner end portion (32) arranged to seat in an end portion (14) of the tubular housing 11.

7. A control cable adjuster device as claimed in Claim 6, characterised in that the relative axial movement between the first member (30) and the tubular housing (11) is restricted by means of an external circumferential rib (35) formed on the inner end portion (32) of the first member (30) and spaced from a shoulder (32b) on a main portion of the first member (30) co-acting with an inwardly directed circumferential rib (36) on the end portion (14) of the tubular housing (11).

8. A control cable adjuster device as claimed in Claim 6 or Claim 7, characterised in that the relative rotational movement between the first member (30) and the tubular housing (11) is restrained by means of axial splines (32a) formed either on the external cylindrical surface of the inner end portion (32) of the first member (30) or on the internal cylindrical surface of the end portion (14) of the tubular housing (11) co-acting with axial grooves (14a) formed respectively either on the inner cylindrical surface of the end portion (14) of the tubular housing (11) or on the external cylindrical surface of the inner end portion (32) of the first member (30).

9. A control cable adjuster device as claimed in any preceding Claim, characterised in that the first member (30) is moveable axially of the tubular housing (11) over a restricted distance to contact the collet means (13) and, upon further restricted axial movement, to urge the collet means (13) out of engagement with the serrations (12a) on the termination member rod (12).

10. A control cable adjuster device as claimed in any preceding Claim, characterised in that the second member (40) is formed with an enlarged knurled flanged portion (43).

**Patentansprüche**

1. Einstellvorrichtung für einen Seilzug mit folgenden Merkmalen:
   ein rohrförmiges Gehäuse (11) besitzt an einem Ende eine erste Verankerung (10), die im Verlauf eines Seilzugs einfügbar ist, und am anderen Ende eine Feststelleinrichtung für eine als Abschlußglied dienende Stange (12), die sich koaxial zu dem rohrförmigen Gehäuse (11) erstreckt und federnd vorgespannt zwischen einer voll rückgezogenen Stellung und einer voll ausgezogenen Stellung in und aus dem rohrförmigen Gehäuse bewegbar ist;
   die Oberfläche der als Abschlußglied dienenden Stange (12) ist mit in Umfangsrichtung sich erstreckenden Wellungen (12a) ausgebildet, die in eine Klemmbackeneinrichtung (13) eingreifen;

an dem von dem rohrförmigen Gehäuse entfernten Ende der Stange (12) ist eine zweite Verankerung in den Seilzug einfügbar;

eine Arretiereinrichtung ist benachbart eines Teils der als Abschlußglied dienenden Stange (12) außerhalb des rohrförmigen Gehäuses (11) vorgesehen und zwischen einer Eingriffsstellung, in welcher ein Teil der Arretiereinrichtung mit der als Abschlußglied dienenden Stange (12) in Eingriff steht, so daß die relative Verschiebung zwischen der als Abschlußglied dienenden Stange (12) und dem rohrförmigen Gehäuse (11) arretiert wird, und einer Außer-Eingriff-Stellung, in welcher die Arretierungseinrichtung außer Eingriff von der als Abschlußglied dienenden Stange (12) ist, bewegbar;

die Arretiereinrichtung umfaßt ein erstes Teil (30), das mit einer zu der als Abschlußglied dienenden Stange (12) koaxialen Bohrung geformt ist, durch welche die als Abschlußglied dienende Stange (12) sich frei erstreckt, und ist in ein Endteil (14) des rohrförmigen Gehäuses (11) in einer Weise hineingeführt, daß eine begrenzte axiale Verschiebung benachbart einer Schulter (36) ermöglicht wird, welche die axiale Auswärtsbewegung begrenzt;

die Arretiereinrichtung umfaßt auch ein zweites Teil (40), das eine Bohrung (44) aufweist, die mit einem inneren Vorsprung (45) versehen ist;

das zweite Teil und der innere Vorsprung sind relativ zu der Achse der als Abschlußglied dienenden Stange (12) zwischen der Eingriffsstellung, in welcher der innere Vorsprung (45) in die Wellungen (12a) auf der als Abschlußglied dienenden Stange (12) eingreift, und der Außer-Eingriff-Stellung, in welcher der innere Vorsprung (45) radial von den Wellungen (12a) Abstand einhält, verschiebbar,

dadurch gekennzeichnet,

daß Einrichtungen (32a, 14a) vorgesehen sind, welche die relative Drehung zwischen dem ersten Teil (30) und dem Gehäuse (11) begrenzen und

daß Einrichtungen (38, 48) vorgesehen sind, welche die axiale Verschiebung des zweiten Teils (40) relativ zu dem ersten Teil (30) begrenzen, während das zweite Teil (40) sich relativ zu dem ersten Teil (30) drehen kann, und zwar exzentrisch mit Bezug auf die zentrale Achse der Bohrung (31), um die Vorsprünge (45) zwischen der Eingriffsstellung und der Außer-Eingriff-Stellung zu bewegen.

2. Einstelleinrichtung für einen Seilzug nach Anspruch 1,
dadurch gekennzeichnet,
daß der innere Vorsprung (45) eine radiale Innenseite von teilweise zylindrischer Ausbildung hat und mit einer Anordnung von im axialen Abstand voneinander angeordneten, in Umfangsrichtung sich erstreckender Wellungen (46) geformt ist, die komplementär zu den Wellungen (12a) auf der als Abschlußglied dienenden Stange (12) ausgebildet sind.

3. Einstelleinrichtung für einen Seilzug nach Anspruch 1 oder 2,
dadurch gekennzeichnet,
daß das zweite Teil (40) mit einer exzentrischen Nabe (41) ausgebildet ist, die eine radial äußere, zylindrische Oberfläche zu einer Achse (L1) aufweist, die von der Achse (L2) der zentralen Bohrung (44) des zweiten Teils versetzt und so angeordnet ist, daß sie mit einer exzentrischen Bohrung (37b) im ersten Teil (30) zusammenarbeitet.

4. Einstelleinrichtung für einen Seilzug nach Anspruch 3,
dadurch gekennzeichnet,
daß die relative axiale Verschiebung zwischen dem ersten Teil (30) und dem zweiten Teil (40) durch eine Umfangsrippe (48) begrenzt wird, die auf einem der Teile (30, 40) angeformt ist und mit einer Umfangsnut (38) zusammenarbeitet, die am anderen Teil (30, 40) angebracht ist.

5. Einstelleinrichtung für einen Seilzug nach Anspruch 3 oder 4,
dadurch gekennzeichnet,
daß die relative Drehbewegung zwischen dem ersten Teil (30) und dem zweiten Teil (40) mittels eines Vorsprungs (47) auf einem der Teile (30, 40) begrenzt wird, der mit Anschlägen (39a, 39b) zusammenarbeitet, die an dem anderen Teil (30, 40) angebracht sind.

6. Einstelleinrichtung für Seilzug nach einem der vorhergehenden Ansprüche,
dadurch gekennzeichnet,
daß das erste Teil (30) mit einem zylindrischen inneren Endteil (32) ausgebildet ist, der in einem Endteil (14) des rohrförmigen Gehäuses (11) sitzt.

7. Einstelleinrichtung für einen Seilzug nach Anspruch 6,
dadurch gekennzeichnet,
daß die relative axiale Verschiebung zwischen dem ersten Teil (30) und dem rohrförmigen Gehäuse (11) mittels einer äußeren Umfangsrippe (35) begrenzt wird, die auf dem inneren Endteil (32) des ersten Teils (30) angebracht ist und einen Abstand von einer Schulter (32b) auf dem Hauptteil des ersten Teils (30) einhält, das mit einer nach innen gerichteten Umfangsrippe (36) am Endteil (14) des rohrförmigen Gehäuses (11) zusammenarbeitet.

8. Einstelleinrichtung für einen Seilzug nach Anspruch 6 oder 7,
dadurch gekennzeichnet,
daß die relative Drehbewegung zwischen dem ersten Teil (30) und dem rohrförmigen Gehäuse (11) mittels axialer Keilzähne (32a) begrenzt wird, die entweder auf der äußeren zylindrischen Oberfläche des inneren Endteils (32) des ersten Teils (30) oder auf der inneren zylindrischen Oberfläche des Endteils (14) des rohrförmigen Gehäuses (11) angebracht sind und mit axialen Nuten (14a) zusammenarbeiten, die entweder jeweils auf der inneren zylindrischen Oberfläche des Endteils (14) des rohrförmigen Gehäuses (11) oder auf der äußeren zylindrischen Oberfläche des inneren Endteils (32) des ersten Teils (30) angebracht sind.

9. Einstelleinrichtung für einen Seilzug nach einem der vorhergehenden Ansprüche,
dadurch gekennzeichnet,
daß das erste Teil (30) axial zu dem rohrförmigen Gehäuse (11) über eine beschränkte Entfernung bewegbar ist, um die Klemmbackeneinrichtung (13) zu berühren und bei weiterer begrenzter axialer Bewegung die Klemmbackeneinrichtung (13) außer Eingriff mit den Wellungen (12a) auf der als Abschlußglied dienenden Stange (12) zu drängen.

10. Einstelleinrichtung für einen Seilzug nach einem der vorhergehenden Ansprüche,
dadurch gekennzeichnet,
daß das zweite Teil (40) mit einem vergrößerten, gerändelten Flanschteil (43) ausgebildet ist.

**Revendications**

1. Dispositif de réglage pour commande par câble comprenant un boîtier tubulaire (11) comportant à une extrémité un premier ancrage (10) pouvant être relié dans une longueur de câble et à l'autre extrémité un moyen de positionnement pour une tige d'entretoisement (12) sollicitée élastiquement pour se projeter dans le même axe que le boîtier tubulaire (11) entre une position complètement rétractée dans le boîtier tubulaire, et une position complètement déployée à partir du boîtier tubulaire, la tige d'entretoisement (12) étant dotée sur sa surface de crans circonférentiels (12a) pouvant être engagés avec des douilles de serrage (13) et, sur son extrémité éloignée du boîtier tubulaire, un second ancrage pouvant être relié dans la longueur du câble, et des moyens de retenue disposés adjacents à une portion de la tige d'entretoisement (12) à l'extérieur du boîtier tubulaire (11) mobiles entre une position engagée dans laquelle une portion des moyens de retenue est engagée avec la tige d'entretoisement (12), de manière que le mouvement relatif entre la tige d'entretoisement (12) et le boîtier tubulaire (11) soit restreint, et une position dégagée dans laquelle les moyens de retenue sont dégagés de la tige d'entretoisement (12), les moyens de retenue comprenant un premier organe (30) doté d'un alésage (31) coaxial à la tige d'entretoisement (12) dans laquelle la tige d'entretoisement (12) s'étend librement et relié dans une portion d'extrémité (14) du boîtier tubulaire (11) de manière à permettre un déplacement axial limité adjacent à un épaulement (36) restreignant un déplacement axialement vers l'extérieur, et un second organe (40) comportant un alésage (44) doté d'une projection interne (45), le second organe et la projection interne étant mobiles relativement à l'axe de la tige d'entretoisement (12) entre la position engagée à laquelle la projection interne (45) s'engage dans les crans (12a) sur la tige d'entretoisement (12) et la position dégagée à laquelle la projection interne (45) est espacée radialement des crans (12a), caractérisé en ce qu'un moyen (32a, 14a) est destiné à restreindre la rotation relative entre le premier organe (30) et le boîtier (11) et un moyen (38, 48) destiné à restreindre le déplacement axial du second organe (40) par rapport au premier organe (30) tout en permettant au second organe (40) de tourner relativement au premier organe (30) excentriquement par rapport à l'axe central de l'alésage (31) de manière à déplacer la projection (45) entre la position engagée et la position dégagée.

2. Dispositif de réglage pour commande par câble selon la revendication 1, caractérisé en ce que la projection interne (45) comporte une face interne radialement partiellement cylindrique et est dotée d'un ensemble de crans (46) espacés axialement, espacés circonférentiellement, complémentaires des crans (12a) sur la tige d'entretoisement (12).

3. Dispositif de réglage pour commande par câble selon la revendication 1 ou 2, caractérisé en ce que le second organe (40) est doté d'un bossage excentrique (41) comportant une surface cylindrique externe radialement avec un axe (L1) décalé de l'axe (L2) de l'alésage central (44) du second organe destinée à coopérer avec un alésage excentrique (37b) formé dans le premier organe (30).

4. Dispositif de réglage pour commande par câble selon la revendication 3, caractérisé en ce que le déplacement axial relatif entre le premier organe (30) et le second organe (40) est restreint au moyen d'une nervure circonférentielle (48) formée sur un des organes (30, 40) coopérant avec une nervure circonférentielle (38) formée sur l'autre des organes (30, 40).

5. Dispositif de réglage pour commande par câble selon la revendication 3 ou 4, caractérisé en ce que la rotation relative entre le premier organe (30) et le second organe (40) est restreinte au moyen d'une projection (47) sur un des organes (30, 40) coopérant avec des butées (39a, 39b) formées sur l'autre desdits organes (30, 40).

6. Dispositif de réglage pour commande par câble selon l'une quelconque des revendications précédentes, caractérisé en ce que le premier organe (30) est doté d'une portion d'extrémité interne cylindrique (32) agencée pour reposer dans une portion d'extrémité (14) du boîtier tubulaire (11).

7. Dispositif de réglage pour commande par câble selon la revendication 6, caractérisé en ce que le déplacement axial relatif entre le premier organe (30) et le boîtier tubulaire (11) est restreint au moyen d'une nervure circonférentielle externe (35) formée sur la portion d'extrémité interne (32) du premier organe (30) et espacée d'un épaulement (32b) sur une portion principale du premier organe (30) coopérant avec une nervure circonférentielle (36) dirigée vers l'intérieur sur la portion d'extrémité (14) du boîtier tubulaire (11).

8. Dispositif de réglage pour commande par câble selon la revendication 6 ou 7, caractérisé en ce que la rotation relative entre le premier organe (30) et le boîtier tubulaire (11) est restreint au moyen de cannelures axiales (32a) formées soit sur la surface cylindrique externe de la portion d'extrémité interne (32) du premier organe (30), soit sur la surface cylindrique interne de la portion d'extrémité (14) du boîtier tubulaire (11) coopérant avec des gorges axiales (14a) formées respectivement sur la surface cylindrique interne de la portion d'extrémité (14) du boîtier tubulaire (11), soit sur la surface cylindrique externe de la portion d'extrémité interne (32) du premier organe (30).

9. Dispositif de réglage pour commande par câble selon l'une quelconque des revendications précédentes, caractérisé en ce que le premier organe (30) est mobile dans l'axe du boîtier tubulaire (11) sur une distance restreinte pour contacter les douilles de serrage (13) et, lors du déplacement axial encore restreint, pour amener les douilles de serrage (13) à être dégagées des crans (12a) sur la tige d'entretoisement (12).

10. Dispositif de réglage pour commande par câble selon l'une quelconque des revendications précédentes, caractérisé en ce que le second organe (40) est doté d'une portion à rebord moletée agrandie (43).

FIG.1

FIG.2

FIG.3

FIG.4

FIG.5

FIG.6

FIG.7

FIG.8

FIG.9

FIG.10